# EUROPÄISCHE PATENTSCHRIFT

(11) **EP 3 024 952 B1**
(45) Veröffentlichungstag und Bekanntmachung des Hinweises auf die Patenterteilung: **20.06.2018**
(21) Anmeldenummer: 14741863.6
(22) Anmeldetag: 18.07.2014
(51) Int. Cl.: C21D 9/48, C21D 6/00, C21D 9/00, C21D 1/00, C21D 1/40, C22C 38/00, C21D 1/42, C21D 1/673

(54) **VERFAHREN UND VORRICHTUNG ZUM PARTIELLEN HÄRTEN VON HALBZEUGEN**
METHOD AND DEVICE FOR PARTIALLY HARDENING SEMIFINISHED PRODUCTS
PROCÉDÉ ET DISPOSITIF PERMETTANT LE DURCISSEMENT PARTIEL DE DEMI-PRODUITS

(30) Priorität: 26.07.2013 DE 102013108046
(43) Veröffentlichungstag der Anmeldung: 01.06.2016
(73) Patentinhaber: ThyssenKrupp Steel Europe AG, 47166 Duisburg (DE)
(72) Erfinder: SIKORA, Sascha, 44534 Lünen (DE); GORSCHLÜTER, Jörg, 59075 Hamm (DE); PIERONEK, David, 44329 Dortmund (DE)
(74) Vertreter: thyssenkrupp Intellectual Property GmbH
(86) Internationale Anmeldenummer: PCT/EP2014/065515
(87) Internationale Veröffentlichungsnummer: WO 2015/011051

(56) Entgegenhaltungen:
- WO-A2-2011/026712
- DE-A1-102007 043 154
- DE-C1- 10 012 974
- US-A1- 2003 090 032
- US-A1- 2011 045 316

## Beschreibung

Die Erfindung betrifft ein Verfahren zum partiellen Härten eines Halbzeugs bestehend aus einem härtbaren Stahl in einem Werkzeug, wobei das Halbzeug die Querschnittsform eines offenen oder geschlossenen Profils aufweist, wobei das Halbzeug in das geöffnete Werkzeug eingelegt wird, wobei das Verfahren die folgenden Schritte aufweist:
- Erwärmen mindestens eines zu härtenden Bereichs des Halbzeugs auf eine Temperatur oberhalb der Ac₁-Temperatur des Werkstoffes des Halbzeugs,
- Einlegen des mindestens lokal erwärmten Halbzeugs in ein Werkzeug,
- Schließen des Werkzeugs und Annähern von mindestens einem aktiven Werkzeugkühlelement an mindestens einen zu härtenden Bereich des Halbzeugs,
- Abkühlen zumindest des mindestens einen zu härtenden Bereichs des Halbzeugs mit einer definierten Abkühlrate, so dass gehärtetes Gefüge in den abgekühlten Bereichen entsteht.
Darüber hinaus betrifft die Erfindung eine Vorrichtung zum Härten eines Halbzeugs, welches die Querschnittsform eines offenen oder geschlossenen Profils aufweist, mit mindestens zwei Werkzeughälften, so dass das Halbzeug in das geöffnete Werkzeug eingelegt werden kann, wobei mindestens ein aktives Werkzeugkühlelement vorgesehen ist, welches relativ zum eingelegten Halbzeug bewegbar angeordnet ist und welches Kühlmittel aufweist, über welche der mindestens eine zu härtenden Bereich des Halbzeugs mit einer definierten Abkühlrate abgekühlt werden kann, so dass gehärtetes Gefüge in den definiert abgekühlten Bereichen entsteht.

Um belastungsgerecht ausgelegte Bauteile zur Verfügung zu stellen, ist es bekannt maßgeschneiderte Halbzeuge, sogenannte "tailored blanks" mit unterschiedlichen Materialeigenschaften herzustellen, die aus verschiedenen miteinander verschweißten Werkstoffen oder Materialdicken bestehen, die die unterschiedlichen mechanischen Eigenschaften gewährleisten. Darüber hinaus ist bekannt, als Alternative hierzu, die unterschiedlichen verschiedenen mechanischen Eigenschaften durch eine Gefügeumwandlung zu erreichen. Hierzu werden härtbare Stahlwerkstoffe verwendet, welche partiell auf eine Temperatur oberhalb des Ac₁-Temperaturpunktes oder des Ac₃-Temperaturpunktes gebracht werden und anschließend schnell abgekühlt werden, so dass zumindest teilweise das oberhalb der Ac₁- bzw. Ac₃-Temperatur vorliegende austenitische Gefüge in martensitisches Gefüge umgewandelt wird. Dieses martensitische Gefüge kann dann beispielsweise bei Mangan-Bor-Stählen Zugfestigkeiten von bis zu 2000 MPa im gehärteten Zustand zur Verfügung stellen.

Aus der japanischen Patentanmeldung JP 2002-020854 A ist beispielsweise ein Verfahren zur Herstellung eines geformten Metallkörpers bekannt, welcher aus zwei verschiedenen Profilen besteht, wobei das Bauteil aus einem ersten und einem zweiten Profil besteht, wobei eines der Profile einem Härtungsprozess unterzogen worden ist. Das so hergestellte belastungsgerecht ausgelegte Bauteil weist jedoch weiterhin eine Schweißnaht auf und muss daher zur Bereitstellung verschiedener mechanischer Eigenschaften in einem Bauteil weiterhin einer Mehrzahl von Arbeitsschritten unterworfen werden. Die Wirtschaftlichkeit der Herstellung von Bauteilen mit belastungsgerechten mechanischen Eigenschaften, welche die mechanischen Eigenschaften durch Gefügeumwandlungen bereitstellen, kann insofern verbessert werden.

Aus dem Stand der Technik ist ferner die WO 2011/026712 A2 bekannt, welche ein Verfahren und eine Vorrichtung zum partiellen Härten von offenen Profilen offenbart.

Es ist daher Aufgabe der vorliegenden Erfindung ein kostengünstiges Verfahren zum partiellen Härten von Halbzeugen, welche die Querschnittsform eines offenen oder geschlossenen Profils aufweisen, zur Verfügung zu stellen, so dass auf eine vollständige Härtung des Halbzeugs oder das Vorsehen von Schweißverbindung zur Bereitstellung unterschiedlicher mechanischer Eigenschaften verzichtet werden kann. Darüber hinaus liegt der vorliegenden Erfindung die Aufgabe zugrunde, eine Vorrichtung zur Durchführung des Verfahrens vorzuschlagen.

Gemäß einer ersten Lehre der vorliegenden Erfindung wird die aufgezeigte Aufgabe durch ein Verfahren zum partiellen Härten eines Halbzeugs gelöst, wobei das Verfahren die folgenden Schritte aufweist:
- Erwärmen mindestens eines zu härtenden Bereichs des Halbzeugs auf eine Temperatur oberhalb der Ac₁-Temperatur des Werkstoffes des Halbzeugs,
- Einlegen des mindestens lokal erwärmten Halbzeugs in ein Werkzeug,
- Schließen des Werkzeugs und Annähern von mindestens einem aktiven Werkzeugkühlelement an mindestens einen zu härtenden Bereich des Halbzeugs,
- Abkühlen zumindest des mindestens einen zu härtenden Bereiches des Halbzeugs mit einer definierten Abkühlrate, so dass gehärtetes Gefüge in den abgekühlten Bereichen entsteht.

Es hat sich gezeigt, dass ein partielles Härten eines Halbzeugs, welches eine Querschnittsform aufweist, die die Form eines offenen oder geschlossenen Profils aufweist, in einem Werkzeug durch aktive Werkzeugkühlelemente besonders präzise und lokal gehärtet werden kann. Die Gefügeumwandlung wird durch aktive Werkzeugkühlelemente erreicht, welche bei eingelegtem Halbzeug sich den zu härtenden Bereichen des Halbzeugs nähern und so das Halbzeug zumindest lokal begrenzt härten Denkbar ist auch, dass das Halbzeug vollständig auf eine Temperatur oberhalb des Ac₁- bzw. Ac₃-Temperaturpunktes erwärmt wird. Durch das anschließende Abkühlen der zu härtenden Bereiche mit einer definierten d.h. ausreichenden Abkühlrate zur Erzeugung von gehärtetem Gefüge, liegt dann in den zu härtenden Bereichen zumindest teilweise martensitisches Gefüge vor, das zu einer deutlichen Festigkeitssteigerung des Bauteils/Halbzeugs führt. Die Abkühlraten, welche zur Erzeugung gehärteten Gefüges notwendig sind, sind von dem jeweiligen Werkstoff abhängig. Dabei existiert in der Regel eine Untergrenze für die Abkühlrate, welche zur Ausbildung des gehärteten Gefüges eingehalten werden muss. Diese Untergrenze der Abkühlrate beträgt beispielsweise bei einem 22MnB5-Werkstoff 27 K/s. Durch das Verfahren kann in lokal begrenzten Bereichen, ein Härten sichergestellt werden, um ein belastungsgerecht ausgelegtes Halbzeug/Bauteil, das insbesondere im Kraftfahrzeugbau eingesetzt werden soll, zur Verfügung zu stellen.

Erfindungsgemäß weist das partiell zu härtende Halbzeug mindestens eine Kante auf, wobei zumindest teilweise der Kantenradius der mindestens einen Kante des Halbzeugs gehärtet wird. Der Kantenradius entspricht erfindungsgemäß dem gekrümmten Bereich der Kante senkrecht zur Erstreckung der Kante. Der Kantenradius erstreckt sich in radialer Richtung vorzugsweise symmetrisch zu beiden Seiten der Kante hin und in axialer Richtung entlang der Kante. Der Kantenradius entspricht dem Bereich der Kante des Halbzeugs, welcher durch einen gedachten Kreis mit einem entsprechenden Radius überstrichen wird, wobei die Krümmung in der Mitte der Kante den gedachten Radius und den Mittelpunkt des gedachten Kreises vorgibt. Die Härtung des Kantenradius der Kanten ergibt insbesondere bei axial belasteten Bauteilen ein besonderes Steigerungspotential in Bezug auf das Energieabsorptionsvermögen in Relation zum Verformungsweg. Wenn der Kantenradius in der Radialebene nur teilweise gehärtet wird, kann das Energieabsorptionsvermögen zudem eingestellt werden. Ein genau definierbares Deformationsverhalten kann darüber hinaus ebenfalls durch die vorgegebene Härtung der Kanten, also durch den Anteil von gehärtetem Gefüge am Gesamtgefüge erreicht werden. Besonders bevorzugt ist die Kante oder sind die Kanten über ihre gesamte Länge gehärtet.

Gemäß einer ersten Ausgestaltung des Verfahrens verläuft der mindestens eine zu härtende Bereich zumindest teilweise axial und/oder radial im Halbzeug und wird durch mindestens ein aktives Werkzeugkühlelement gehärtet. Axial verlaufende, zu härtende Bereiche in einem Halbzeug haben den Vorteil, dass diese die Steifigkeit des Halbzeugs in Längsrichtung deutlich erhöhen. Insbesondere führen diese bei axial belasteten Bauteilen, beispielsweise im Kraftfahrzeug, zu einer deutlichen Verbesserung des Energieabsorptionsvermögens in axialer Richtung. Radial verlaufende, gehärtete Bereiche erhöhen dagegen die Knicksteifigkeit des Halbzeugs in den entsprechenden Bereichen. Über die aktiven Werkzeugkühlelemente können beide Bereiche, sowohl radial als auch axial zu härtende Bereiche sehr präzise in das Halbzeug eingebracht werden und die Härtung dieser Bereiche sichergestellt werden.

Gemäß einer weiteren Ausführungsform des Verfahrens steht mindestens ein aktives Werkzeugkühlelement mit dem mindestens einen zu härtenden Bereich des Halbzeugs in Wärme leitenden Kontakt und die Härtung des zu härtenden Bereichs des Halbzeugs erfolgt zumindest teilweise durch Wärmeleitung. Die zu härtenden Bereiche können hierdurch sehr präzise eingegrenzt werden, in dem beispielsweise die übrigen Bereiche keinen Kontakt mit dem aktiven Werkzeugkühlelement aufweisen und sich somit kein oder kein vollständig martensitisches Gefüge einstellen kann.

Vorzugsweise erfolgt gemäß einer weiteren Ausführungsform die zumindest lokale Erwärmung des Halbzeugs durch Verwendung von elektrischem Stromfluss und/oder durch Induktion. Durch elektrischen Stromfluss können ebenfalls lokal sehr begrenzte Bereiche sehr schnell auf eine hohe Temperatur gebracht werden. Dies gilt auch für die Erwärmung der Bereiche durch Induktion, wobei in den zu erwärmenden, zu härtenden Bereichen des Halbzeugs Wirbelströme induziert werden, die ebenfalls zu einer sehr schnellen Erwärmung von sehr lokal begrenzten Bereichen des Halbzeugs führen. Alternativ ist auch eine vollständige Erwärmung des Halbzeugs möglich, beispielsweise in einem Ofen, vorzugsweise in einem Durchlaufofen.

Bauteile mit hohem axialem Energieaufnahmevermögen können dadurch bereitgestellt werden, dass gemäß einer weiteren Ausgestaltung das Halbzeug zumindest teilweise die Querschnittform eines mehreckigen, geschlossenen Profils aufweist und mindestens eine der axial verlaufenden Kanten zumindest teilweise gehärtet wird. Die Härtung der Kanten erfolgt dabei wieder durch zumindest teilweise Härtung der Kantenradien, wie oben definiert.

Es kann darüber hinaus vorteilhaft sein, verschiedene gehärtete Bereiche mit unterschiedlichen Festigkeiten zur Verfügung zu stellen. Dies kann in bevorzugter Weise dadurch erreicht werden, dass mindestens ein axial und/oder radial in mindestens zwei Segmente unterteiltes aktives Werkzeugkühlelement den zu härtenden Bereich härtet. Einerseits kann durch die Aufteilung des aktiven Werkzeugkühlelementes in mehrere Segmente eine komplexe Formgebung des Halbzeugs mit einfachen aktiven Werkzeugkühlelementen gehärtet werden. Andererseits ermöglicht ein in mindestens zwei Segmente unterteiltes aktives Werkzeugkühlelement, dass gemäß einer weiteren Ausgestaltung des Verfahrens die unterschiedlichen Segmente des mindestens einen aktiven Werkzeugkühlelementes die zugehörigen Bereiche des Halbzeugs auf unterschiedliche Temperaturen abkühlt. Damit kann auch ein unterschiedlicher Härtegrad der den Segmenten zugehörigen Bereiche des Halbzeugs erzeugt werden. Hierdurch kann eine weitere Flexibilität im Hinblick auf eine belastungsgerechte Auslegung des Halbzeugs erreicht werden.

Um ein besonders kontrolliertes Abkühlverhalten der auf oberhalb der Ac₁-Temperatur erwärmten, zu härtenden Bereiche des Halbzeugs zu ermöglichen, werden gemäß einer weiteren Ausgestaltung des Verfahrens die zu härtenden Bereiche des Halbzeugs durch Wärme leitenden Kontakt des Werkzeugs mit an die zu härtenden Bereiche angrenzenden Bereichen des Halbzeugs mit einer definierten Abkühlrate abgekühlt, so dass gehärtetes Gefüge in den zu härtenden Bereichen des Halbzeugs entsteht. Mit anderen Worten benachbart zu den zu härtenden Bereichen wird ein Wärme leitender Kontakt zwischen dem Werkzeug und den angrenzenden Bereichen des Halbzeugs hergestellt, so dass über Wärmefluss auch die zu härtenden Bereiche sehr schnell abgekühlt werden. Die Erfindung macht sich zu Nutze, dass Stahlteile im Allgemeinen eine sehr gute Wärmleitfähigkeit aufweisen und damit auch durch den Wärme leitenden Kontakt von benachbarten Bereichen der zu härtenden Bereiche des Halbzeugs eine starke Abkühlung der zu härtenden Bereiche erfolgen kann. Hierzu können beispielsweise gekühlte Wirkflächen des Werkzeugs verwendet werden.

Zur Unterstützung des Kühlungsvorgangs kann kumulativ oder alternativ das Werkzeug gemäß einer weiteren Ausgestaltung des Verfahrens zumindest teilweise mit einem Kühlmedium, welches zumindest teilweise in direktem Kontakt zum Halbzeug oder in Wärme leitendem Kontakt mit dem Halbzeug steht, zum Abkühlen des Halbzeugs durchströmt werden. Vorzugsweise wird ein Halbzeug mit mindestens einem gehärteten Kantenbereich für eine Struktur oder Karosserie eines Kraftfahrzeugs hergestellt. Dieses Halbzeug kann beispielsweise besonders gut als axial kraftbeaufschlagtes Profil in einer Kraftfahrzeugstruktur bzw. Karosserie eingesetzt werden. Es weist ein besonders hohes Energieaufnahmevermögen gepaart mit einem kurzen Deformationsweg auf.

Vorzugsweise wird ein Halbzeug aus einem Mangan-Bor-Stahl, einem Dualphasenstahl oder einem Restaustenit(TRIP)-Stahl partiell gehärtet, wobei bei den genannten Stahlgüten besonders gute Festigkeitssteigerungen möglich sind.

Gemäß einer zweiten Lehre der vorliegenden Erfindung wird die aufgezeigte Aufgabe auch durch eine Vorrichtung zum Härten eines Halbzeugs, welches die Querschnittsform eines offenen oder geschlossenen Profils aufweist dadurch gelöst, dass mindestens ein aktives Werkzeugkühlelement vorgesehen ist, welches relativ zum eingelegten Halbzeug bewegbar angeordnet ist und welches Kühlmittel aufweist, über welche der mindestens eine zu härtende Bereich des Halbzeugs mit einer definierten bzw. ausreichenden Abkühlrate abgekühlt werden kann, so dass gehärtetes Gefüge in den definiert abgekühlten Bereichen entsteht. Die im Werkzeug vorgesehenen aktiven Werkzeugkühlelemente zur Härtung des mindestens einen zu härtenden Bereichs des Halbzeugs ermöglichen es, nach dem Einlegen des Halbzeugs eine sehr präzise Wiederholungsgenauigkeit in Bezug auf die zu härtenden Bereiche zu erzielen.

Erfindungsgemäß weist das mindestens eine aktive Werkzeugkühlelement Führungsmittel für ein Kühlmedium auf, die beispielsweise als Kühlmittelkanäle ausgebildet sind, durch die ein fluidförmiges Kühlmedium strömen kann, wie beispielsweise Wasser oder ein Kühlgas. Durch diese Kühlmedien kann die Abkühlrate der mit den aktiven Werkzeugkühlelementen in Kontakt stehenden Bereichen des Werkzeugs, beispielsweise durch die jeweilige Temperatur der Kühlmedien, aktiv gesteuert werden.

Gemäß einer ersten Ausgestaltung der Vorrichtung verläuft das mindestens eine aktive Werkzeugkühlelement zumindest teilweise axial und/oder radial zum partiell zu härtenden Halbzeug. Optional ist das aktive Werkzeugkühlelement in radial und/oder axial verlaufende Segmente aufgeteilt, welche eine größere Flexibilität in dem Bereitstellen von zu härtenden Bereichen im Halbzeug ermöglicht. Vorzugsweise ist eine Mehrzahl an aktiven Werkzeugkühlelementen vorgesehen, um die, falls notwendig, verschiedenen, zu härtenden Bereiche des Halbzeugs herzustellen.

Sind in der Vorrichtung Wirkflächen vorgesehen, welche zumindest temporär in Wärme leitendem Kontakt mit an den zu härtenden Bereichen angrenzenden Bereichen des Halbzeug stehen, kann erreicht werden, dass über Wärmefluss die zu härtenden Bereiche mit einer hohen Abkühlrate gekühlt werden und so die gewünschte Gefügeumwandlung in gehärtetes Gefüge erreicht wird. Bevorzugt sind die Wirkflächen beweglich angeordnet und können beispielsweise nach Erreichen der gewünschten Temperatur oberhalb der Ac₁-Temperatur bzw. oberhalb der Ac₃-Temperatur des Werkstoffes der zu härtenden Bereiche an die benachbarten Bereiche des Halbzeugs angelegt werden, so dass die Abkühlung der zu härtenden Bereiche rasch erfolgt.

Unterstützt kann das Abkühlen der zu härtenden Bereiche dadurch auf einfache Weise, dass die Vorrichtung Mittel aufweist, mit welchen ein Kühlmedium zumindest teilweise in direktem oder in Wärme leitendem Kontakt mit dem zu härtenden Halbzeug durch die Vorrichtung hindurchgeleitet werden kann. Das Kühlmedium kann so zusätzlich die Abkühlrate der zu härtenden Bereiche erhöhen und damit die gewünschte Gefügeumwandlung in diesen Bereichen herbeiführen.

Im Weiteren soll die Erfindung anhand von Ausführungsbeispielen in Verbindung mit der Zeichnung näher erläutert werden. Die Zeichnung zeigt in
- Fig. 1a: in einer perspektivischen Darstellung eine Vorrichtung zum partiellen Härten eines Halbzeugs,
- Fig. 1b: die Vorrichtung aus Fig. 1a) in einer Vorderansicht,
- Fig. 1c: die Vorrichtung aus Fig. 1a) in einer reduzierten, schematischen perspektivischen Darstellung,
- Fig. 1d: das Ausführungsbeispiel aus Fig. 1c) in einer reduzierten Vorderansicht,
- Fig. 2a bis d: das Ausführungsbeispiel einer Vorrichtung aus Fig. 1 in geschlossenem Zustand,
- Fig. 3 und 4: zwei Ausführungsbeispiele einer Vorrichtung zum partiellen Härten eines Halbzeugs in schematischer, perspektivischer Darstellung,
- Fig. 5: den zu härtenden Kantenradius eines Halbzeugs in einer schematischen Schnittansicht,
- Fig. 6: ein Ausführungsbeispiel eines mit dem Verfahren hergestellten Halbzeugs in einer perspektivischen Darstellung,
- Fig. 7: in einer Seitenansicht das Deformationsverhalten von partiell gehärteten Halbzeugen im Vergleich zu konventionellen ungehärteten Halbzeugen und
- Fig. 8: in einem Diagramm das Kaft-Deformationsweg-Verhalten der in Fig. 6 dargestellten Halbzeuge.

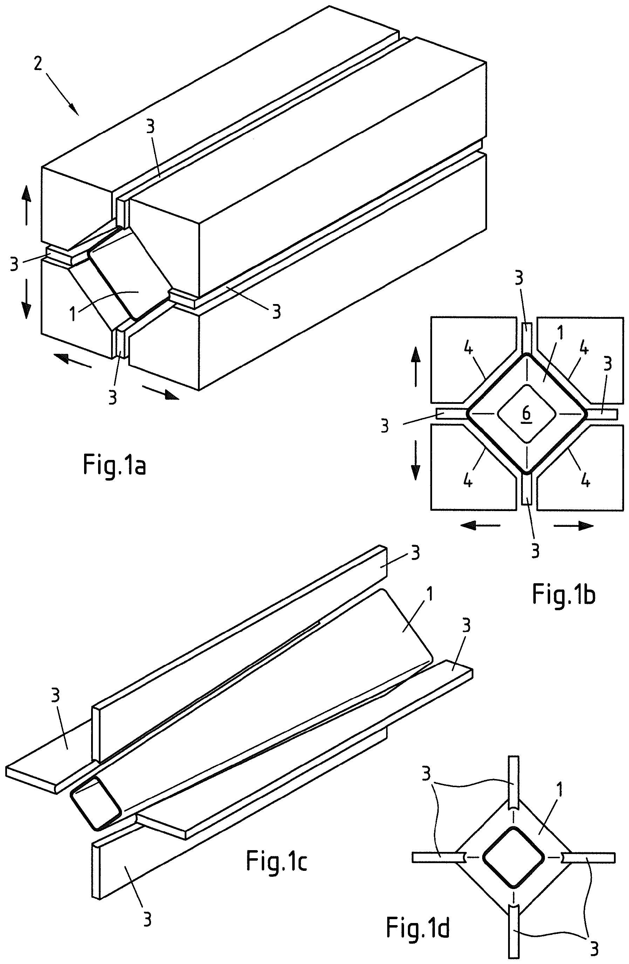

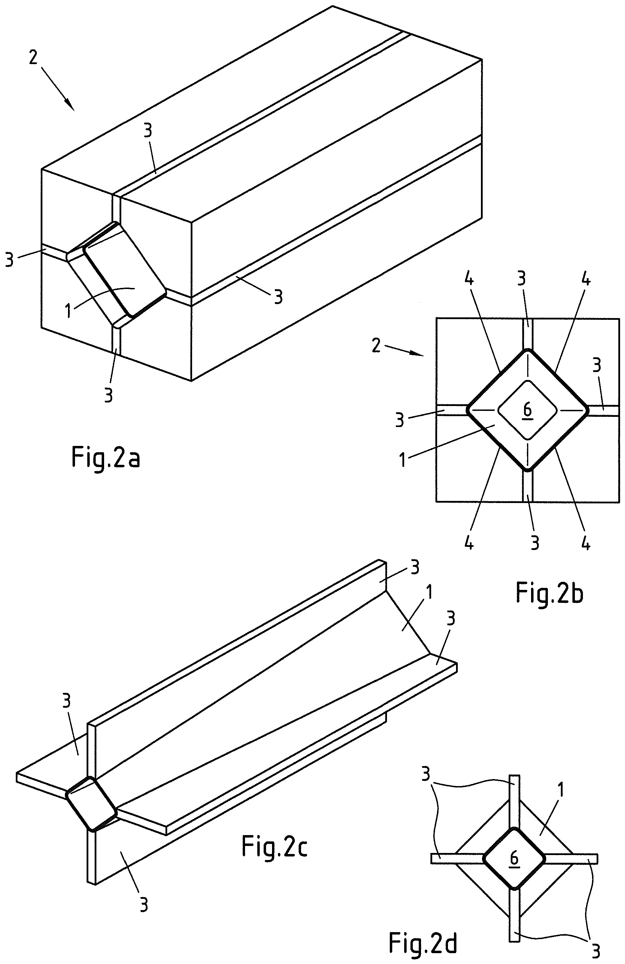

Die Fig. 1 und 2 zeigen ein Verfahren zum partiellen Härten eines Halbzeugs 1 in einem Werkzeug 2, wobei das Halbzeug die Querschnittsform eines geschlossenen Profils aufweist. Fig. 1a, b, c und d zeigen dabei das leicht geöffnete Werkzeug mit eingelegtem Halbzeug 1 in jeweils unterschiedlichen perspektivischen, schematischen Darstellungen. In das geöffnete Werkzeug 2 ist das Halbzeug 1 eingelegt worden. Das Werkzeug 2 besteht dabei aus mindestens zwei Werkzeughälften, welche gegeneinander so bewegt werden können, dass das Halbzeug 1 eingelegt werden kann. Das Halbzeug 1 selbst besteht aus einem härtbaren Stahl, welcher bei Erwärmung auf oberhalb der Ac₁-Temperatur des Werkstoffs austenitisches Gefüge bildet. Ab der Ac₃-Temperatur des Werkstoffs liegt dann vollständig austenitisches Gefüge vor, welches mit einer definierten Abkühlrate abgekühlt, gehärtetes Gefüge, vorzugsweise martensitisches Gefüge bildet. Das Werkzeug weist zudem aktive Werkzeugkühlelemente 3 auf, welche sich axial entlang des Halbzeugs 1 an den entsprechenden Kantenbereichen des Halbzeugs 1 erstrecken. Fig. 1b) zeigt nun eine schematische Vorderansicht des Werkzeugs 2 mit den aktiven Werkzeugkühlelementen 3, welche, da das Werkzeug 2 leicht geöffnet ist, am Halbzeug 1 nicht anliegen. Das Halbzeug 1 weist einen konischen Querschnittsverlauf auf, welcher ebenfalls in Fig. 1b und 1c zu erkennen ist.

Um den Abstand der aktiven Werkzeugkühlelemente 3 vom Halbzeug 1 zu verdeutlichen, ist in Fig. 1c lediglich das Halbzeug 1 und die an den Kantenbereichen verlaufenden aktiven Werkzeugkühlelemente 3 dargestellt. Die aktiven Werkzeugkühlelemente 3 enthalten nicht dargestellte Führungsmittel für ein Kühlmedium, also beispielsweise Kühlkanäle, durch welche das fluidartige Kühlmedium fließen kann. Die Kantenbereiche des Halbzeugs 1, die beispielsweise auf eine Temperatur oberhalb des Ac₁-Temperaturpunktes des Werkstoffs des Halbzeugs erwärmt sind, können über diese Werkzeugkühlelemente 3 aktiv abgekühlt werden. Auch in Fig. 1d ist noch einmal dargestellt, dass die aktiven Werkzeugkühlelemente beim Einlegen des Halbzeugs 1 in das Werkzeug zunächst beabstandet sind. In der schematischen Vorderansicht, Fig. 1d, sind lediglich die aktiven Werkzeugkühlelemente 3 und das Halbzeug 1 dargestellt. Wie bereits zuvor ausgeführt, können die aktiven Werkzeugkühlelemente als Kühlmittel beispielsweise Bereiche aufweisen, welche mit den zu härtenden Bereichen des Halbzeugs 1 in Wärme leitendem Kontakt stehen und die Bereiche des Halbzeugs zumindest teilweise durch Wärmeleitung abgekühlt werden.

Fig. 2a zeigt nun das Ausführungsbeispiel aus Fig. 1a in einer perspektivischen, schematischen Darstellung in geschlossenem Zustand, wobei die aktiven Werkzeugkühlelemente 3 an das Halbzeug 1 angenähert sind und, in vorliegendem Fall, mit dem Halbzeug 1 Wärme leitenden Kontakt aufweisen. Die axial verlaufenden Kantenbereiche des Halbzeugs 1, die auf eine Temperatur von oberhalb des Ac₁-Temperaturpunktes, vorzugsweise oberhalb des Ac3-Temperaturpunktes des Werkstoffs des Halbzeugs erwärmt sind, werden nun durch die aktiven Werkzeugkühlelemente 3 schnell abgekühlt, so dass sich ein Härtegefüge einstellt. Die hier nur schematisch dargestellten aktiven Werkzeugkühlelemente 3 können durch den lokalen, Wärme leitenden Kontakt mit dem Halbzeug 1 eine sehr begrenzte lokale Härtung der Kantenbereiche des Halbzeugs 1 bereitstellen. Wie Fig. 2b zeigt, weist das Werkzeug 2 zusätzliche Wirkflächen 4 auf, welche benachbart zu den Kantenbereichen Kontakt mit dem Halbzeug 1 aufweisen. Darüber hinaus besteht die Möglichkeit, nach Erwärmen des vollständigen Halbzeugs und bereits durch Einleiten der Härtung in den Kantenbereich durch die aktiven Werkzeugkühlelemente 3 zusätzlich den definierten Abkühlvorgang durch Durchleiten eines Kühlmediums durch die Öffnung 6 des geschlossenen Profils 1 noch weiter zu steigern. Durch das Kühlmedium kann beispielsweise unmittelbar die Wärme aus dem zu härtenden Bereich abtransportiert werden. Als Kühlmedien kommen dabei sowohl flüssige als auch gasförmige Medien in Betracht. Bei offenen Profilen kann eine Kühlmediumführung durch einen Hohlraum gebildet durch Werkzeug 2 und Halbzeug 1 bereitgestellt werden.

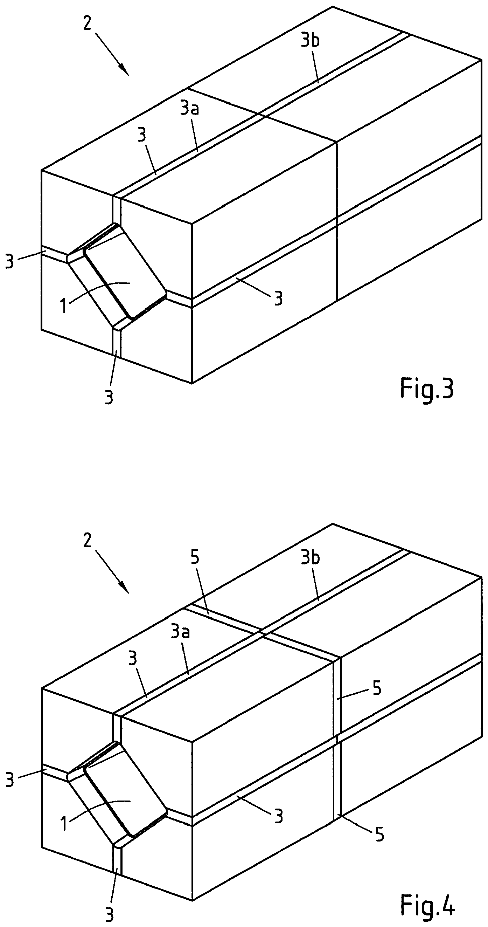

Fig. 3 zeigt nun in einer perspektivischen, schematischen Darstellung ein Werkzeug 2 zum partiellen Härten eines Halbzeugs 1, welches axial verlaufende aktive Werkzeugkühlelemente 3 aufweist, die in axialer Richtung in zwei Segmente 3a und 3b unterteilt sind. Sowohl die einzelnen axial verlaufenden, aktiven Werkzeugkühlelemente 3 als auch die Segmente der Werkzeugkühlelemente 3a und 3b können untereinander die zugehörigen Bereiche des Halbzeugs 1 unterschiedlich stark abkühlen, so dass verschiedene Härtungsgrade erzielt werden können. Gleiches gilt auch beispielsweise für das in Fig. 4 angedeutete, radial verlaufende aktive Werkzeugkühlelement 5, welches in Radialsegmente eingeteilt ist. Die aktiven Werkzeugkühlelemente 3 sind in den Fig. 1 bis Fig. 4 nur schematisch dargestellt und können die Härtung des Halbzeugs bewirken.

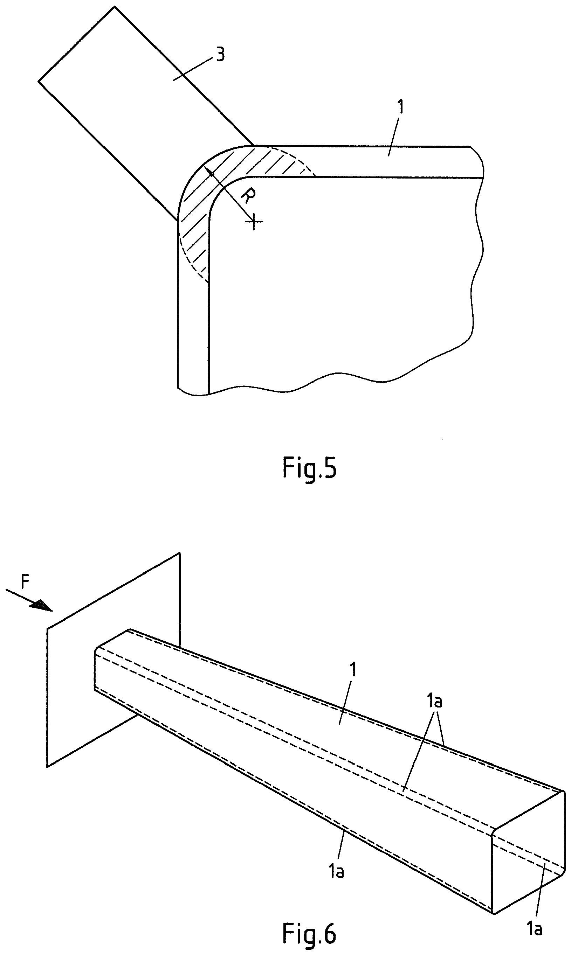

In Fig. 5 ist der Kantenbereich eines Halbzeugs schematisch dargestellt. Der Kantenradius R entspricht dem Außenradius des Halbzeugs 1 in der Mitte der Kante. Der vom Radius R überstrichene Bereich des Halbzeugs wird als zu härtende Kante definiert, welche über das ebenfalls schematisch dargestellte, aktive Werkzeugkühlelement 3 gehärtet wird.

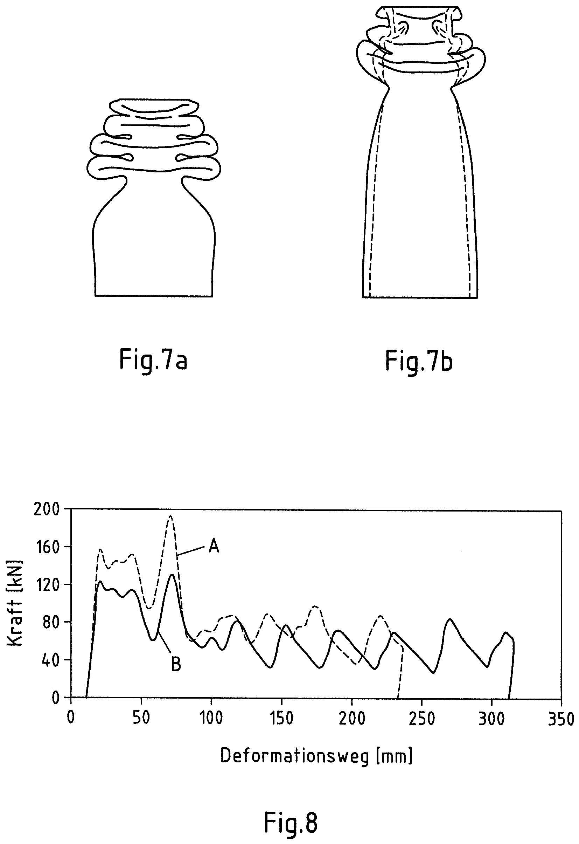

Fig. 6 zeigt nun in einer schematischen Darstellung ein Halbzeug 1, welches gehärtete Kantenradien aufweist und wie in Fig. 8 angedeutet einem Deformationsversuch unterzogen wird. Hierzu wird eine Kraft F auf den konisch zulaufenden Bereich des Halbzeugs 1 in axialer Richtung ausgeübt.

Das Ergebnis des Deformationsversuches zeigt Fig. 7 in einem Vergleich mit einem konventionellen Halbzeug 1'. Im Deformationsversuch des konventionellen Halbzeugs 1 in Fig. 7a erkennt man deutlich, dass der Deformationsweg bei identischer Kraft größer ist. Das Halbzeug aus Fig. 7b zeigt ebenfalls wie das konventionelle Halbzeug ein kontrolliertes Deformationsverhalten bei deutlich geringerem Deformationsweg und gleicher aufgenommener Absorptionsenergie. Durch die Härtung der Kanten, d.h. also der Kantenradien entlang der Axialrichtung erfolgt eine erhebliche Aussteifung des hergestellten Profils. Dies gilt auch für offene Profile in analoger Weise.

In Fig. 8 ist das Deformationsweg/Kraftdiagramm dargestellt, wobei die Fläche unterhalb der beiden Kurven jeweils die absorbierte Energie darstellt. Das an den Kanten lokal gehärtete und mit dem erfindungsgemäßen Verfahren hergestellte Halbzeug ist in der gestrichelten Kurve A dargestellt und weist eine deutlich höhere Energieaufnahme im Anfangsbereich auf bis es zur Ausbildung der Faltenbildung kommt. Ab einem Deformationsweg von etwa 75 mm ist das Deformationsverhalten des in den Kantenbereichen gehärteten Halbzeugs nahezu identisch zu dem des konventionellen Halbzeugs in Kurve B. Der Deformationsweg endet jedoch bei berechneten 240 mm im Vergleich zu 310 mm bei konventionellem Halbzeug.

Wie man erkennen kann, kann mit dem erfindungsgemäßen Verfahren sowie mit der erfindungsgemäßen Vorrichtung ein Halbzeug bereitgestellt werden, welches nicht nur auf kostengünstige Weise herstellbar ist, sondern auch noch vorteilhafte Deformationseigenschaften aufweist, so dass das Halbzeug zur Bereitstellung von beispielsweise axial beaufschlagten Teilen einer Struktur oder Karosserie eines Kraftfahrzeugs hergestellt werden können.

## Patentansprüche

1. Verfahren zum partiellen Härten eines Halbzeugs bestehend aus einem härtbaren Stahl in einem Werkzeug, wobei das Halbzeug die Querschnittsform eines offenen oder geschlossenen Profils aufweist und in das geöffnete Werkzeug eingelegt wird, wobei das Verfahren die folgenden Schritte aufweist:
- Erwärmen mindestens eines zu härtenden Bereichs des Halbzeugs auf eine Temperatur oberhalb der Ac₁-Temperatur des Werkstoffes des Halbzeugs,
- Einlegen des mindestens lokal erwärmten Halbzeugs in ein Werkzeug,
- Schließen des Werkzeugs und Annähern von mindestens einem aktiven Werkzeugkühlelement an mindestens einen zu härtenden Bereich des Halbzeugs,
- Abkühlen zumindest des mindestens einen zu härtenden Bereichs des Halbzeugs mit einer definierten Abkühlrate, so dass gehärtetes Gefüge in den abgekühlten Bereichen entsteht,
**dadurch gekennzeichnet, dass**
das Halbzeug mindestens eine Kante aufweist und zumindest teilweise der Kantenradius der mindestens einen Kante des Halbzeugs gehärtet wird..

2. Verfahren nach Anspruch 1,
**dadurch gekennzeichnet, dass**
der mindestens eine zu härtende Bereich zumindest teilweise axial und/oder radial im Halbzeug verlaufen und durch mindestens ein aktives Werkzeugkühlelement gehärtet werden.

3. Verfahren nach Anspruch 1 oder 2,
**dadurch gekennzeichnet, dass**
das mindestens eine aktive Werkzeugkühlelemente mit dem mindestens einen zu härtenden Bereich in Wärme leitenden Kontakt steht und die Härtung des zu härtenden Bereichs des Halbzeugs zumindest teilweise durch Wärmeleitung erfolgt.

4. Verfahren nach einem der Ansprüche 1 bis 3,
**dadurch gekennzeichnet, dass.**
die mindestens lokale Erwärmung des Halbzeugs durch Verwendung von elektrischem Stromfluss und/oder durch Induktion erfolgt.

5. Verfahren nach einem der Ansprüche 1 bis 4,
**dadurch gekennzeichnet, dass**
das Halbzeug zumindest teilweise die Querschnittsform eines mehreckiges, geschlossenen Profils aufweist und mindestens einer der axial verlaufenden Kantenradien zumindest teilweise gehärtet wird.

6. Verfahren nach einem der Ansprüche 2 bis 5 ,
**dadurch gekennzeichnet, dass**
mindestens ein axial und/oder radial in mindestens zwei Segmente unterteiltes aktives Werkzeugkühlelement den zu härtenden Bereich härtet.

7. Verfahren nach Anspruch 6,
**dadurch gekennzeichnet, dass**
die unterschiedlichen Segmente des mindestens einen aktiven Werkzeugkühlelementes die zugehörigen Bereiche des Halbzeugs auf unterschiedliche Temperaturen abkühlt.

8. Verfahren nach einem der Ansprüche 1 bis 7,
**dadurch gekennzeichnet, dass**
die zu härtenden Bereiche des Halbzeugs durch Wärme leitenden Kontakt des Werkzeugs mit an die zu härtenden Bereiche angrenzenden Bereichen des Halbzeugs mit einer definierten Abkühlrate abgekühlt werden, so dass gehärtetes Gefüge in den zu härtenden Bereichen des Halbzeugs entsteht.

9. Verfahren nach einem der Ansprüche 1 bis 8,
**dadurch gekennzeichnet, dass**
das Werkzeug zumindest teilweise mit einem Kühlmedium, welches zumindest teilweise in direktem Kontakt zum Halbzeug oder in Wärme leitenden Kontakt mit dem Halbzeug steht, zum Abkühlen des Halbzeugs durchströmt wird.

10. Verfahren nach einem der Ansprüche 1 bis 9,
**dadurch gekennzeichnet, dass**
ein Halbzeug mit mindestens einem gehärteten Kantenbereich für eine Struktur oder Karosserie eines Kraftfahrzeugs hergestellt wird.

11. Verfahren nach einem der Ansprüche 1 bis 10,
**dadurch gekennzeichnet, dass**
ein Halbzeug aus einem Mangan-Bor-Stahl, einem Dualphasenstahl oder einem Restaustenit(TRIP)-Stahl gehärtet wird.

12. Vorrichtung zum partiellen Härten eines Halbzeugs (1), welches die Querschnittsform eines offenen oder geschlossenen Profils aufweist, mit mindestens zwei Werkzeughälften, so dass das Halbzeug (1) in das geöffnete Werkzeug (2) eingelegt werden kann, insbesondere zur Durchführung eines Verfahrens nach einem der Ansprüche 1 bis 11, wobei
mindestens ein aktives Werkzeugkühlelement (3, 5) vorgesehen ist, welches relativ zum eingelegten Halbzeug (1) bewegbar angeordnet ist und welches Kühlmittel aufweist, über welche der mindestens eine zu härtenden Bereich des Halbzeugs (1) mit einer definierten Abkühlrate abgekühlt werden kann, so dass gehärtetes Gefüge in den definiert abgekühlten Bereichen entsteht,
**dadurch gekennzeichnet, dass**
das mindestens eine aktive Werkzeugkühlelement (3, 5) Führungsmittel für ein Kühlmedium aufweist.

13. Vorrichtung nach Anspruch 12,
**dadurch gekennzeichnet, dass**
das mindestens eine aktive Werkzeugkühlelement (3, 5) zumindest teilweise axial und/oder radial zum partiell zu härtenden Halbzeug (1) verläuft und optional in radial und/oder axial verlaufende Segmente aufgeteilt sind.

14. Vorrichtung nach einem der Ansprüche 12 oder 13,
**dadurch gekennzeichnet, dass**
in der Vorrichtung Wirkflächen (4) vorgesehen sind, welche in Wärme leitenden Kontakt mit an den zu härtenden Bereichen angrenzenden Bereichen des Halbzeug zumindest temporär stehen.

15. Vorrichtung nach einem der Ansprüche 12 bis 14,
**dadurch gekennzeichnet, dass**
die Vorrichtung Mittel aufweist, mit welchen ein Kühlmedium zumindest teilweise in direktem oder in Wärme leitenden Kontakt mit dem zu härtenden Halbzeug durch die Vorrichtung durchgeleitet werden kann.

## Claims

1. Method for partially hardening a semifinished product consisting of a hardenable steel in a mold, the semifinished product having the cross-sectional form of an open or closed profile and being placed into the opened mold, wherein the method has the following steps:
- heating at least one region to be hardened of the semifinished product to a temperature above the Ac₁ temperature of the material of the semifinished product,
- placing the at least locally heated semifinished product into a mold,
- closing the mold and bringing up at least one active mold cooling element close to at least one region to be hardened of the semifinished product,
- cooling at least the at least one region to be hardened of the semifinished product at a defined cooling rate, so that a hardened microstructure is produced in the cooled regions,
**characterized in that** the semifinished product has at least one edge and at least partially the edge radius of the at least one edge of the semifinished product is hardened.

2. Method according to Claim 1, **characterized in that** the at least one region to be hardened extend at least partially axially and/or radially in the semifinished product and are hardened by at least one active mold cooling element.

3. Method according to Claim 1 or 2, **characterized in that** the at least one active mold cooling element is in heat-conducting contact with the at least one region to be hardened and the hardening of the region to be hardened of the semifinished product takes place at least partially by heat conduction.

4. Method according to one of Claims 1 to 3, **characterized in that** the at least local heating of the semifinished product takes place by using electrical current flow and/or by induction.

5. Method according to one of Claims 1 to 4, **characterized in that** the semifinished product has at least partially the cross-sectional form of a polygonal, closed profile and at least one of the axially extending edge radii is at least partially hardened.

6. Method according to one of Claims 2 to 6, **characterized in that** at least one active mold cooling element that is subdivided axially and/or radially into at least two segments hardens the region to be hardened.

7. Method according to Claim 6, **characterized in that** the different segments of the at least one active mold cooling element cools the associated regions of the semifinished product down to different temperatures.

8. Method according to one of Claims 1 to 7, **characterized in that** the regions to be hardened of the semifinished product are cooled at a defined cooling rate by heat-conducting contact of the mold with regions of the semifinished product adjoining the regions to be hardened, so that a hardened microstructure is produced in the regions to be hardened of the semifinished product.

9. Method according to one of Claims 1 to 8, **characterized in that** the mold is at least partially flowed through by a cooling medium, which is at least partially in direct contact with the semifinished product or in heat-conducting contact with the semifinished product, for cooling the semifinished product.

10. Method according to one of Claims 1 to 9, **characterized in that** a semifinished product with at least one hardened edge region is produced for a structure or body of a motor vehicle.

11. Method according to one of Claims 1 to 10, **characterized in that** a semifinished product of a manganese-boron steel, a dual-phase steel or a residual-austenite (TRIP) steel is hardened.

12. Device for partially hardening a semifinished product (1) that has the cross-sectional form of an open or closed profile, comprising at least two mold halves, so that the semifinished product (1) can be placed into the opened mold (2), in particular by carrying out a method according to one of claims 1 to 11, wherein, at least one active mold cooling element (3, 5) is provided, arranged movably in relation to the placed-in semifinished product (1) and having cooling means by way of which the at least one region to be hardened of the semifinished product (1) can be cooled at a defined cooling rate, so that a hardened microstructure is produced in the regions cooled in a defined manner,
**characterized in that** the at least one active mold cooling element (3, 5) has guiding means for a cooling medium.

13. Device according to Claim 12, **characterized in that** the at least one active mold cooling element (3, 5) extends at least partially axially and/or radially in relation to the semifinished product (1) to be partially hardened and are optionally divided into radially and/or axially extending segments.

14. Device according to one of Claims 12 and 13, **characterized in that** active areas (4) that are at least temporarily in heat-conducting contact with regions of the semifinished product adjoining the regions to be hardened are provided in the device.

15. Device according to one of Claims 12 to 14, **characterized in that** the device has means with which a cooling medium can be made to pass through the device at least partially in direct or heat-conducting contact with the semifinished product to be hardened.

## Revendications

1. Procédé pour durcir partiellement dans un outil une ébauche constituée d'un acier durcissable, l'ébauche présentant une section transversale en forme de profil ouvert ou de profil fermé et étant insérée dans l'outil ouvert, le procédé présentant les étapes suivantes :
- chauffage d'au moins une partie de l'ébauche à durcir jusqu'à une température supérieure à la température Ac₁ du matériau de l'ébauche,
- insertion dans un outil de l'ébauche chauffée au moins localement,
- fermeture de l'outil et approche d'au moins une partie de l'ébauche à durcir par au moins un élément de refroidissement actif de l'outil,
- refroidissement à une vitesse de refroidissement définie de la ou des parties de l'ébauche à durcir, de manière à obtenir un réseau durci dans les parties refroidies,
**caractérisé en ce que**
l'ébauche présente au moins une arête et au moins une partie du rayon de la ou des arêtes de l'ébauche est durcie.

2. Procédé selon la revendication 1, **caractérisé en ce que** la ou les parties à durcir s'étendent au moins en partie axialement et/ou radialement dans l'ébauche et sont durcies par au moins un élément de refroidissement actif de l'outil.

3. Procédé selon les revendications 1 ou 2, **caractérisé en ce que** le ou les éléments de refroidissement actif de l'outil sont en contact thermiquement conducteur avec la ou les parties à durcir et **en ce que** le durcissement de la partie de l'ébauche à durcir s'effectue au moins en partie par conduction thermique.

4. Procédé selon l'une des revendications 1 à 3, **caractérisé en ce que** le chauffage au moins local de l'ébauche s'effectue par recours à un courant électrique et/ou par induction.

5. Procédé selon l'une des revendications 1 à 4, **caractérisé en ce qu'**au moins une partie de l'ébauche présente une section transversale en forme de profil polygonal fermé et **en ce que** le rayon d'au moins une des arêtes axiales est au moins en partie durci.

6. Procédé selon l'une des revendications 2 à 5, **caractérisé en ce qu'**au moins un élément de refroidissement actif de l'outil divisé axialement et/ou radialement en au moins deux segments durcit la partie à durcir.

7. Procédé selon la revendication 6, **caractérisé en ce que** les différents segments du ou des éléments de refroidissement actif de l'outil refroidit les parties concernées de l'ébauche à des températures différentes.

8. Procédé selon l'une des revendications 1 à 7, **caractérisé en ce que** les parties de l'ébauche à durcir sont refroidies à une vitesse de refroidissement définie par contact thermiquement conducteur de l'outil avec les parties de l'ébauche adjacentes aux parties à durcir, de manière à obtenir un réseau durci dans les parties refroidies.

9. Procédé selon l'une des revendications 1 à 8, **caractérisé en ce que** pour le refroidissement de l'ébauche, l'outil est traversé au moins en partie par un fluide de refroidissement au moins en partie en contact direct avec l'ébauche ou en contact thermiquement conducteur avec l'ébauche.

10. Procédé selon l'une des revendications 1 à 9, **caractérisé en ce qu'**une ébauche présentant au moins une partie d'arête durcie est fabriquée pour une structure ou une carrosserie d'un véhicule automobile.

11. Procédé selon l'une des revendications 1 à 10, **caractérisé en ce qu'**une ébauche en acier au manganèse et au bore, un acier biphasique ou un acier à austénite résiduelle (TRIP) est durcie.

12. Ensemble de durcissement partiel d'une ébauche (1) dont la section transversale présente la forme d'un profil ouvert ou d'un profil fermé, l'ensemble présentant au moins deux moitiés d'outil, de sorte que l'ébauche (1) puisse être insérée dans l'outil (2) ouvert, en particulier en vue de la mise en oeuvre d'un procédé selon l'une des revendications 1 à 11,
dans lequel au moins un élément (3, 5) de refroidissement actif de l'outil est prévu, est disposé de manière à pouvoir se déplacer par rapport à l'ébauche (1) qui a été insérée et présente des moyens de refroidissement par lesquels la ou les parties de l'ébauche (1) à durcir peuvent être refroidies à une vitesse de refroidissement définie, de manière à obtenir un réseau durci dans les parties refroidies,
**caractérisé en ce que**
le ou les éléments (3, 5) de refroidissement actif de l'outil présentent des moyens de guidage pour un fluide de refroidissement.

13. Ensemble selon la revendication 12, **caractérisé en ce que** le ou les éléments (3, 5) de refroidissement actif de l'outil s'étendent au moins en partie axialement et/ou radialement par rapport à l'ébauche (1) à durcir partiellement et sont facultativement divisés en segments s'étendant radialement et/ou axialement.

14. Ensemble selon l'une des revendications 12 ou 13, **caractérisé en ce que** des surfaces actives (4) qui sont au moins temporairement en contact thermiquement conducteur avec des parties de l'ébauche adjacentes aux parties à durcir sont prévues dans l'ensemble.

15. Ensemble selon l'une des revendications 12 à 14, **caractérisé en ce que** l'ensemble présente des moyens par lesquels un fluide de refroidissement au moins partiellement en contact direct ou en contact thermiquement conducteur avec l'ébauche à durcir peuvent être guidés à travers l'ensemble.
